# EUROPEAN PATENT APPLICATION

(11) **EP 2 107 063 A1**
(43) Date of publication of application: **07.10.2009**
(21) Application number: 08425210.5
(22) Date of filing: 31.03.2008
(51) Int. Cl.: C07F 7/08, C07F 7/18, C10M 105/76, C10M 107/50, C10M 139/02, C10M 139/04, C10M 155/02, C10M 169/04, C10N 40/10

(54) **Sliding agent for winter sport equipment**

(71) Applicant: Energes S.r.l., 20129 Milano (IT)
(72) Inventor: Maniero, Francesco, 30031 Dolo (Venezia) (IT); Bevilacqua, Marco, 36078 Valdagno (Vicenza) (IT); Conte, Lino, 35028 Piove di Sacco (Padova) (IT)
(74) Representative: Pulieri, Gianluca Antonio

(57) **Abstract**

The present invention relates to the lubrication and/or water repellency of gears used, in particular, during the practice of winter sports.

A surface tension of the lubricant agent lower than that of the gear implies an increase of water repellency and thus, an improvement of the capability of removing the water film forming between the snow and the bottom lining of the gear during the reciprocal movement. In fact, this water film increases the adherence of the bottom lining to the snow and reduces the sliding thereof.

Such lubricating action is achieved by the use of the compound having the described formula, pure or in a mixture.

## Description

The present invention relates to the lubrication of gears used, in particular, in the practice of winter sports.

It is known in the art to increase the fluency of the contact surfaces between snow and the gears used in the practice of winter sports, such as for example ski, snowboard, luge and the like, by the use of special additives, the so-called ski-waxes.

Ski-waxes are usually applied onto the bottom linings, i.e. the contact surfaces of the gear with the snow, or incorporated therein, and they exhibit a lower surface tension than the material the bottom linings are made of, for example polyethylene.

A lower surface tension implies an increase of water repellency and thus, an improvement of the capability of removing the water film forming between the snow and the bottom lining of the gear during the reciprocal movement. This water film increases the adherence of the bottom lining to the snow and reduces the sliding thereof.

However, the compounds used to this end according to the prior art, for example the linear perfluorocarbon polymers illustrated in patents EP 0132879 or DE 3925525, or the fluorinated polymers disclosed in US 5202041, exhibit various drawbacks.

In particular, the melting points of such compounds fall within a quite restricted temperature range. The environment temperature range wherein such products have a good efficiency is therefore limited.

Moreover, while other products exhibit a high water repellency in a wider temperature range, they are scarcely compatible with the normal paraffin waxes and are therefore little versatile.

The present invention therefore is intended for solving the prior art problems and, in particular, those mentioned above.

Such object is achieved by the use of a compound of following formula (I), pure or in a mixture, as sliding agent: 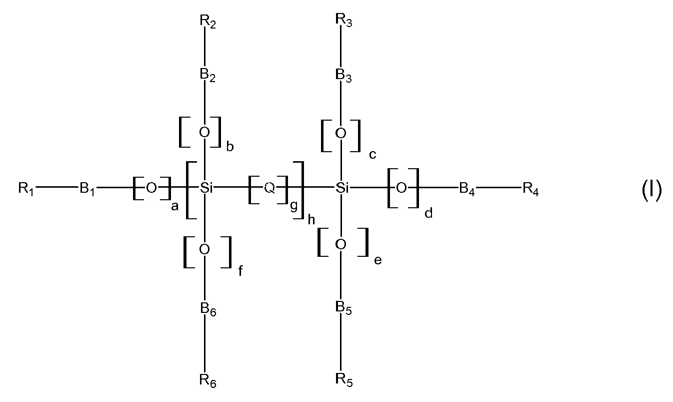 wherein
- at least one between R₁, R₂, R₃, R₄, R₅, R₆ is a linear or branched perfluorocarbon radical of general formula CₙF₂ₙ₊₁, n being an integer comprised between 2 and 20;
- the remaining radicals R₁, R₂, R₃, R₄, R₅, R₆ are independently selected from the group consisting of:
   a) H(CF₂)ₙ, wherein n is an integer comprised between 2 and 20;
   b) hydrocarbon radical from C₅ to C₂₄;
   c) phenyl;
   d) R"₃Si-O-(R"₂SiO)ᵢ wherein R" is a hydrocarbon radical from C₁ to C₅ and i is
   an integer comprised between 3 and 50;
- B₁, B₂, B₃, B₄, B₅, B₆ indicate covalent bonds or divalent radicals selected from the group consisting of:
   e) -CH=CHCH₂-;
   f) -(CH₂)ₚ-;
   g) -(CH₂)ₚ-O-(CH₂)ᵣ-;
   h) -(CH₂)ₚ-S-(CH₂)ᵣ-;
   i) -CH=CH-(CH₂)ₚ-O-(CH₂)ᵣ-;
   j) -CH=CH-(CH₂)ₚ-S-(CH₂)ᵣ-;
   k) -CH₂CH(OCH₃)CH₂-;
   l) -(CH₂)ₚ-O-(C₆H₄)-(CH₂)ᵣ-;
   m)-(CH2)ₚ-O-(C₆H₄)-O-(CH₂)ᵣ-;
   n) -(CH₂)ₚ-S-(C₆H₄)-O-(CH₂)ᵣ-;
   o) -(CH₂)ₚ-(C₆H₄)-(CH₂)ᵣ-;
   wherein p and r are integers comprised between 2 and 10;
- a, b, c, d, e, f, g are independently equal to 0 or 1;
- h is an integer comprised between 0 and 3;
- for h≠0, Q is a divalent radical selected from the group consisting of:
   p) -O-;
   q) -(CH₂)s-;
   r) -O-(CH₂)ₛ-O-;
   s) -(CH₂)ₜ-O-(CH₂)ᵤ-;
   t) -O-(CH₂)ₜ-O-(CH₂)ᵤ-O-;
   u) -(CH₂)ₚ'-CₙF₂ₙ-(CH₂)_{r'}-;
   v) -O-(CH₂)_{p'}-CₙF₂ₙ-(CH₂)_{r'}-O-;
   wherein s is an integer comprised between 1 and 25, t and u are independently integers comprised between 2 and 20, p' and r' are independently integers comprised between 2 and 10.

According to a preferred embodiment, parameter n is an integer comprised between 4 and 10.

Preferably, the remaining radicals R₁, R₂, R₃, R₄, R₅, R₆ are hydrocarbon radicals from C₁₀ to C₁₈ and even more preferably, saturated and linear chain.

According to an advantageous variation, moreover, R" is a hydrocarbon radical C₁ or C₂.

According to possible variations, the compound of formula (I) may be applied to the contact surface with the snow of gear, suitable for practicing winter sports. As an alternative, it may be incorporated into the contact surface (or bottom lining) of the gear suitable for practicing winter sports.

The present invention relates to the use of a compound of formula (I), according to any one of the previous embodiments, as water repellent agent.

The object of solving the problems of the prior art is further achieved by a compound of formula (I) wherein:
- h is equal to 1;
- at least four between a, b, c, d, e, f are simultaneously equal to 1;
- at least one between R₁, R₂, R₃, R₄, R₅, R₆ is a linear or branched perfluorocarbon radical of general formula CₙF₂ₙ₊₁, n being an integer comprised between 2 and 20,
- the remaining radicals R₁, R₂, R₃, R₄, R₅, R₆ being independently selected from the group consisting of:
   a) H(CF₂)ₙ, wherein n is an integer comprised between 2 and 20;
   b) hydrocarbon radical from C₅ to C₂₄;
   c) phenyl;
   d) R"₃Si-O-(R"₂SiO)ᵢ wherein R" is a hydrocarbon radical from C₁ to C₅ and i is an integer comprised between 3 and 50;
- B₁, B₂, B₃, B₄, B₅, B₆ indicate covalent bonds or divalent radicals selected from the group consisting of:
   e) -CH=CHCH₂-;
   f) -(CH₂)p-;
   g) -(CH₂)p-O-(CH₂)ᵣ-;
   h) -(CH₂)ₚ-S-(CH₂)ᵣ-;
   i) -CH=CH-(CH₂)ₚ-O-(CH₂)ᵣ-;
   j) -CH=CH-(CH₂)ₚ-S-(CH₂)ᵣ-;
   k) -CH₂CH(OCH₃)CH₂-;
   l) -(CH₂)ₚ-O-(C₆H₄)-(CH₂)ᵣ-;
   m)-(CH₂)ₚ-O-(C₆H₄)-O-(CH₂)ᵣ-;
   n) -(CH₂)ₚ-S-(C₆H₄)-O-(CH₂)ᵣ-;
   o) -(CH₂)p-(C₆H₄)-(CH₂)ᵣ-;
   wherein p and r are integers comprised between 2 and 10.

The object of solving the problems of the prior art is, at last, achieved by a compound of formula (I) wherein:
- h is equal to 0;
- a is equal to 0;
- at least one between c, d, e is equal to 1;
- radical R₁ is selected from the group consisting of:
   a) hydrocarbon radical from C₅ to C₂₄;
   b) phenyl;
   c) R"₃Si-O-(R"₂SiO)ᵢ wherein R" is a hydrocarbon radical from C₁ to C₅ and i is
   an integer comprised between 3 and 50;
- at least one between radicals R₃, R₄, R₅ is:
   d) a linear or branched perfluorocarbon radical of general formula CₙF₂ₙ₊₁, n being an integer comprised between 2 and 20; or
   e) H(CF₂)ₙ, wherein n is an integer comprised between 2 and 20;
- B₁, B₃, B₄, B₅ indicate covalent bonds or divalent radicals selected from the group consisting of:
   f) -CH=CHCH₂-;
   g) -(CH₂)ₚ-;
   h) -(CH₂)ₚ-O-(CH₂)ᵣ-;
   i) -(CH₂)ₚ-S-(CH₂)ᵣ-;
   j) -CH=CH-(CH₂)ₚ-O-(CH₂)ᵣ-;
   k) -CH=CH-(CH₂)ₚ-S-(CH₂)ᵣ-;
   l) -CH₂CH(OCH₃)CH₂-;
   m) -(CH₂)ₚ-O-(C₆H₄)-(CH₂)ᵣ-;
   n) -(CH₂)ₚ-O-(C₆H₄)-O-(CH₂)ᵣ-;
   o) -(CH₂)ₚ-S-(C₆H₄)-O-(CH₂)ᵣ-;
   p) -(CH₂)ₚ-(C₆H₄)-(CH₂)ᵣ-;
wherein p and r are integers comprised between 2 and 10.

Advantageously, the compounds object of the two last mentioned variations may be used, pure or in a mixture, as sliding and/or water repellent agents.

The methods used for the synthesis of the compounds of formula (I) are variable according to the reactive radical present in the starting silane.

By way of a non-limiting example, some production examples of compounds usable according to the invention, as well as of uses according to the latter, are provided.

### EXAMPLE 1

### Alcoholysis method

If the starting silane includes a reactive radical ≡ Si-Cl, the reaction envisages reacting the silane with:
- an alcohol, or a mixture of alcohols, of general formula R-B-OH,
   wherein R and B respectively consist of radicals R₁, R₂, R₃, R₄, R₅, R₆ and B₁, B₂, B₃, B₄, B₅, B₆ as defined above.
- a glycol according to one of the following general formulas:
- H-O-(CH₂)ₛ-O-H;
- H-O-(CH₂)ₜ-O-(CH₂)ᵤ-O-H;
- H-O-(CH₂)ₚ-CₙF₂ₙ-(CH₂)ᵣ-O-H;
   wherein p, q, r, s, t are defined as above.

The reaction takes place according to the following general scheme:

(R')ₐ-Si-Cl_{b} + b ROH → (R')ₐ-Si-(OR)_{b}+ b HCI

wherein a + b = 4.

It is an exothermic reaction, which envisages the formation of hydrochloric acid which may be either removed from the reaction environment with a nitrogen flow or blocked in the reaction environment by tertiary amines. In this case, the process envisages washing the product with water to remove the quaternary ammonium salts formed therein.

The reaction may be conducted in bulk or in solvent. In the second case, the solvent is then distilled.

Examples of chlorosilanes used in this reaction are:
- Cl₃-Si-CH₂CH₂(CF₂)₈CH₂CH₂-Si-Cl₃;
- Cl₃-Si-CH₂(CH₂CH₂)₄CH₂-Si-Cl₃;
- CF₃(CF₂)₇SiCl₃;
- CH₃(CH₂)₁₇SiCl₃;
- Cl₃Si-SiCl₃;
- Cl₃S₁-O-SiCl₃.

### EXAMPLE 2

### Hydrosilylation method

When silanes wherein there are radicals ≡ Si-H are used, a sum reaction between the hydrosilane and olefins of the following type is envisaged:
- R-(CH₂)ₚ₋₂-CH=CH₂;
- R-(CH₂)ₚ-O-(CH₂)ᵣ₋₂CH=CH₂;
- R-(CH₂)ₚ-S-(CH₂)ᵣ₋₂CH=CH₂;
- R-CH=CH-(CH₂)ₚ-O-(CH₂)ᵣ₋₂CH=CH₂;
- R-CH=CH-(CH₂)ₚ-S-(CH₂)ᵣ₋₂CH=CH₂;
- R-(CH₂)ₚ-O-(C₆H₄)-(CH₂)ᵣ₋₂-CH=CH₂;
- R-(CH₂)ₚ-S-(C₆H₄)-(CH₂)ᵣ₋₂-CH=CH₂;
- R-(CH₂)ₚ-(C₆H₄)-(CH₂)ᵣ₋₂-CH=CH₂;
- CH₂=CH-(CH₂)ₛ₋₄-CH=CH₂;
- CH₂=CH-(CH₂)ₜ₋₂-O-(CH₂)ᵤ₋₂CH=CH₂;
- CH₂=CH-(CH₂)ₚ₋₂-CₙF₂ₙ-(CH₂)ᵣ₋₂-CH=CH₂.
wherein p, r, s, t, u and R have already been defined above.

The reaction may advantageously be conducted in the presence of a catalyst, such as for example one or more organic peroxides, preferably t-butyl peroxide or benzoil peroxide, in nitrogen atmosphere at a temperature comprised between 60 and 150°C, using a pressure reactor according to the needs.

It is also possible to use a platinum based catalyst such as chloroplatinic acid in 2-propanol solution or platinum complexes. In this case, it will then be necessary to filter the reaction crude after the complete disappearance of the olefin so as to remove the catalytic residues formed.

The reaction takes place according to the following general scheme:

a R-CH=CH₂ + (H)ₐ-Si-(R')_{b} → R-CH₂CH₂-Si-(R')_{b}

wherein a + b = 4.

Examples of silanes usable in this synthesis method are:
- H-SiCl₃;
- H₂SiCl₂;
- CH₃(CF₂)₇SiH₃;
- C₆H₅CH₂SiH₃.

### EXAMPLE 3

### Radical addition methods

If the starting silane includes double bonds, for example vinyl or allyl radicals, mercapto-derivatives of the following general formula may be added thereto, preferably by radical way:
- R-B-SH;
- H-S-(CH₂)ₛ-S-H;
- H-S-(CH₂)ₜ-O-(CH₂)ᵤ-S-H;
- H-S-(CH₂)ₚ-CₙF₂ₙ-(CH₂)ᵣ-S-H;
wherein R, B, s, t, u, p, r have already been defined above.

The reaction is then commonly conducted in the presence of a catalyst, such as for example one or more organic peroxides, preferably t-butyl peroxide and/or benzoyl peroxide, or nitrogen-derivatives, preferably AIBN, in nitrogen atmosphere at a temperature comprised between 60 and 150°C, using a pressure reactor according to the needs.

Generally, the process is carried out with a slight excess of mercapto-derivative, which must then be removed by distillation or re-crystallization of the product.

4 R'SH + (CH₂=CH)₄Si → (R'SCH₂CH₂)₄Si

A further type of radical addition envisages the sum to the double bond of perfluoroalkyl iodides of general formula CₙF₂ₙ₊₁I.

The sum to the double bond takes place with a radical catalyst of the type mentioned above.

The iodide intermediate must be reduced so as to eliminate the iodine present, for example with a reducing agent such as Zn/HCI, LiAIH₄ or Pd/C. Examples of similar reduction reactions are illustrated in Journal fluorine chemistry 20 (1982) 313-327.

The iodide intermediate adduct may optionally be treated with a solution of KOH in methanol in order to eliminate the HI from the molecule. In this case, a double bond of the type Rf-CH=CH-(...)-Si≡ is formed, wherein Rf are perfluorinated radicals.

The reaction takes place according to the following general scheme:

CₙF₂ₙ₊₁-I + (CH₂=CH CH₂)₄Si → (CₙF₂ₙ₊₁CH₂CH(I)CH₂)₄Si

In a subsequent step, according to the reducing agent applied, the following products are further obtainable:
- with Zn/HCI: (CₙF₂ₙ₊₁CH₂CH₂CH₂)₄Si;
- with KOH/CH₃OH: (CₙF₂ₙ₊₁CH=CHCH₂)₄Si.

The first of such compounds is traceable back to a compound of formula (I), wherein the following parameters have been entered:
- h=0;
- a, c, d, e=0;
- B₁, B₃, B₄ and B₅ are covalent bonds or divalent radicals of general formula - (CH₂)ₚ-, wherein p=3;
- R₁, R₃, R₄ and R₅ are linear or branched perfluorocarbon radicals of general formula CₙF₂ₙ₊₁.

On the other hand, the following parameters have been entered for the second one of such compounds:
- h=0;
- a, c, d, e=0;
- B₁, B₃, B₄ and B₅ are covalent bonds or divalent radicals of general formula - CH=CH-CH₂-;
- R₁, R₃, R₄ and R₅ are linear or branched perfluorocarbon radicals of general formula CₙF₂ₙ₊₁.

Examples of silanes usable in this synthesis method are:
- (CH₂=CH CH₂)₄Si;
- (CH₂=CH)₄Si;
- (CH₂=CH CH₂O)₄Si.

If the starting silanes exhibit the simultaneous presence of the above radicals, the illustrated reactions may be suitably combined.

### EXAMPLE 4

Method for the production of a semi-fluorinated product of following general formula (II):

(C₈F₁₇CH₂CH₂O)ₓSi(C₁ₛH₃₇)(OC₁₈H₃₇)_{y} (II)

wherein y + x = 3.

The product of formula (II) results from the general formula (I), for example entering the following parameters:
- parameter h=0;
- parameter a=0;
- B₁ is a covalent bond or divalent radical of general formula 1-(CH₂)ₚ-;
- R₁ is a hydrocarbon radical C_{z};
   wherein p is defined as above, z is an integer comprised between 8 and 16, and wherein p + z = 18;
- parameters c, d=1;
- B₃ and B₄ are covalent bonds or divalent radicals of general formula -(CH₂)ₚ-
- R₃ and R₄ are hydrocarbon radicals Cᵥ;
   wherein p is defined as above, v is an integer comprised betweeen 8 and 16, and wherein p + v = 18;
- parameter e=1;
- B₅ is a covalent bond or divalent radical of general formula -(CH₂)ₚ- with p=2;
- R₅ is a linear or branched perfluorocarbon radical of general formula CₙF₂ₙ₊₁, with n=8.

In a 3.5 litre reactor, provided with mechanical stirrer, bubble condenser, thermometer, under a light nitrogen flow, the following compounds are charged:
- 556,8 grams (1,2 mole) heptadecafluor-1-decanol; and
- 345,6 grams (1,28 mole) octadecanol in 500 grams n-hexane.

It is heated to 50-55°C up to complete solubilization and under a constant nitrogen flow, 320 grams (0,824 mole) octadecyltrichlorosilane are fed drop by drop in about 4 hours.

At the end of the addition, it is left to react 1 more hour, during which hydrochloric acid (HCI) id developed, which is removed from the nitrogen flow.

Afterwards, 70 grams of 1-hexanol are added to eliminate any radicals ≡Si-Cl still present.

The reaction is continued for 30 minutes, then the solvent is removed by distillation.

Two melting peaks are noted from the product DSC assay, one at 40.0°C and another one at 46,2°C ascribable to a mixture of two main compounds with different values of x and y in the formula (II).

The analyses ¹H NMR, ¹⁹F NMR, ²⁹Si NMR are according to the expected product: 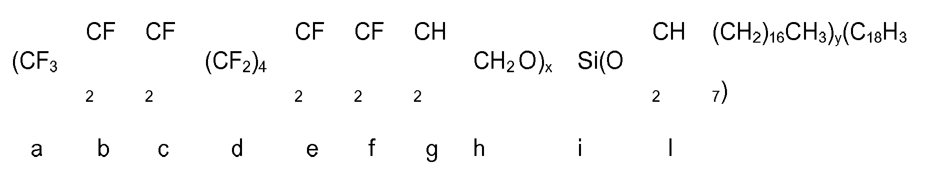
¹⁹F NMR: a = -84,0 ppm; b = -129,3 ppm; c = -126,8 ppm; d = -125,1 ppm; e = - 125,9 ppm; f = -116,7 ppm;
¹H NMR: g = 2,42 ppm; h = 4,02 ppm; I = 3,66 ppm;
²⁹Si NMR: i = -40,7 ppm.

The surface tension of the product is 12,02 mN/m. The contact angle with water is 106,9°.

### EXAMPLE 5

Method for the production of a semi-fluorinated product of the previous general formula (II).

In a 5 litre reactor, under a light nitrogen flow, the following compounds are charged:
- 554,97 grams (1,196 mole) heptadecafluor-1-decanol;
- 345,8 grams (1,278 mole) octadecanol;
- 258,75 grams (2,56 mole) triethylamine;
- 1330 grams N-hexane.

It is heated to 50-55°C up to complete solubilization of the alcohols and under a constant nitrogen flow, 320 grams (0,824 mole) octadecyltrichlorosilane are fed drop by drop in about 4 hours.

The amine reacts with the hydrochloric acid formed in the reaction, forming white salts in suspension.

At the end of the addition, it is left to react 1 more hour, after which the disappearance of the free alcohols is checked by a GC assay.

Afterwards, 112 grams 1-hexanol are added, continuing the reaction for about 30 minutes.

It is washed with 240 grams water for 20 minutes to solubilize all the salts. The higher organic phase is separated and a distillation is conducted to completely eliminate the solvent.

At room temperature, the product obtained is a white solid with the same features as that in example 1.

The surface tension is 11,3 mN/m, with a contact angle of 110,6°.

### EXAMPLE 6

Operatively, the process is as in example 2, charging the reactor with:
- 554,97 grams (0,825 mole) heptadecafluor-1-decanol;
- 446,25 grams (1,65 mole) octadecanol;
- 258,75 grams (2,56 mole) triethylamine;
- 1330 grams hexane;
- 320 grams (0,824 mole) octadecyltrichloro-silane.

The analyses ¹H NMR, ¹⁹F NMR, ²⁹Si NMR are according to the expected product: 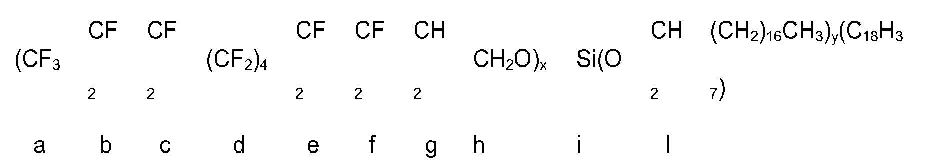
¹⁹F NMR: a = -84,0 ppm; b = -129,3 ppm; c = -126,8 ppm; d = -125,1 ppm; e = - 125,9 ppm; f = -116,7 ppm;
¹H NMR: g = 2,42 ppm; h = 4,02 ppm; I = 3,66 ppm;
²⁹Si NMR: i = -40,7 ppm.

The surface tension of the product is 13,77 mN/m and the melting temperature is 53,37°C.

### EXAMPLE 7

In a 500 ml steel autoclave, in nitrogen atmosphere, the following compounds are charged:
- 6,0 grams (0,0434 mole) 1,9-decadiene (Aldrich);
- 12,344 grams (0,0911 mole) trichlorosilane;
- 22,52 grams hexane;
- 0,02 grams of a 50% solution of hexachloroplatinic acid in 2-propanol.

The reaction mixture is brought to 90°C, under nitrogen atmosphere, for 4 hours.

The complete disappearance of double bonds and of decadiene is checked by IR and GC assays.

The solvent and the trichlorosilane in excess are eliminated with a distillation in nitrogen flow.

12,3 grams product are collected and a 69,3% reaction yield is calculated.

In a 250 ml reactor, provided with mechanical stirrer, bubble condenser, thermometer, under a light nitrogen flow, 2,5 grams (0,00611 mole) synthesized disilane are charged and drop by drop, the following solution is added, composed of:
- 8,87 grams (0,019 mole) heptadecafluor-1-decanol CF₃(CF₂)₇CH₂CH₂OH, and
- 8,0 grams (0,0176 mole) polyethylen-monoalcohol (Aldrich) in toluene at 75°C.

After 5 hours reaction, the disappearance of the oxydryl radicals resulting from any non reacted alcohols is checked by an IR assay, then the solvent is removed by distillation at low pressure.

A white solid is obtained, with a melting temperature comprised between 40 and 46°C.

The surface tension is 12,78 mN/m, with a contact angle with water of 109,3°C.

### EXAMPLE 8

Method for the production of a silane of following general formula (III):

(C₈F₁₇CH₂CH₂SCH₂CH₂)₄Si (III)

The product of formula (III) results from the general formula (I), entering the following parameters:
- parameter h=0;
- parameters a, c, d, e=0;
- B₁, B₃, B₄ and B₅ are covalent bonds or divalent radicals of general formula - (CH₂)ₚ-S-(CH₂)ᵣ-, wherein p, r=2;
- R₁, R₃, R₄ and R₅ are linear or branched perfluorocarbon radicals of general formula CₙF₂ₙ₊₁, with n=8.

In a 100 ml reactor, provided with mechanical stirrer, bubble condenser, thermometer, under a light nitrogen flow, the following compounds are charged:
- 36,5 grams (0,076 mole) 1H, 1H ,2H ,2H-perfluorodecanethiol CF₃(CF₂)₇CH₂CH₂SH (Aldrich);
- 4,0 grams (0,019 mole) tetravinylsilane (Aldrich) and 9 µl luperox® 26 (Arkema).

It is heated to 100°C and the reaction is continued for 3 hours. Afterwards, 9 more µl of luperox® 26 are added and the reaction is continued for 3 more hours.

The complete disappearance of the tetravinylsilane is checked by GC and IR assays (the disappearance of the band at 1600 cm⁻¹ typical of the double bond is observed), the excess of fluorinated thiol is then distilled.

After distillation, 37.6 grams of a product that solidifies at 64-65°C are recovered.

A share of the product is then re-crystallised in acetone for the assay ¹H NMR: 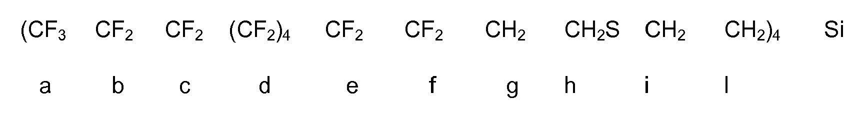
¹H NMR: g = 2,41 ppm (mult.); h = 2,77 ppm (t); i = 2,66 ppm (t); I = 1,07 ppm (t).

The surface tension of the product is 8,84 mN/m. The contact angle with water is 115,7°.

### EXAMPLE 9

Method for the production of a semi-fluorinated product of general formula (IV) as follows:

(C₈F₁₇CH₂CH₂SCH₂CH₂)ₓSi(CH₂CH₂SC₁₂H₂₅)_{y} (IV)

whereiny+x=4.

The product of formula (IV) results from the general formula (I), for example entering the following parameters:
- parameter h=0;
- parameters a, c, d, e=0;
- B₁, B₃, B₄ and B₅ are covalent bonds or divalent radicals of general formula - (CH₂)ₚ-S-(CH₂)ᵣ-, wherein p, r=2;
- R₁ and R₃ are linear or branched perfluorocarbon radicals of general formula CₙF₂ₙ₊₁, with n=8;
- R₄ and R₅ are hydrocarbon radicals C₁₀.

In a 250 ml reactor, provided with mechanical stirrer, bubble condenser, thermometer, under a light nitrogen flow, the following compounds are charged:
- 8,0 grams (0,038 mole) tetravinylsilane (Aldrich);
- 16,2 grams dodecylmercaptane (Aldrich);
- 25 µl luperox® 26 (Arkema).

It is heated to 100°C and the reaction is continued for 3 hours. The following compounds are then added:
- 36,5 grams (0,076 mole) 1 H, 1 H ,2H ,2H-perfluorodecanethyol (Aldrich);
- 25 µl luperox® 26 (Arkema).

The reaction is continued for 3 more hours.

The complete disappearance of the tetravinylsilane is checked by GC and IR assays (the disappearance of the band typical of the double bond is observed), then the excess of fluorinated thiol is distilled.

After distillation, 59,6 grams of product that solidifies at 34-35°C are recovered.

The surface tension is 10,53 mN/m, with a contact angle of the water drop of 118,6°.

### EXAMPLE 10

The assessment of the efficacy of the compound of example 2 was made on a Nordic ski run, traced with constant slope at 2800 m altitude, with the following snow and weather conditions:
- air temperature: +2°C;
- relative humidity: 65%;
- snow temperature: 0°C;
- type of snow: partly transformed;
- snow appearance: shiny;
- weather conditions: cloudless.

A photocell is arranged at the beginning and at the end of the run to measure the path time.

The tests were conducted by a ski teacher expert in this type of tests.

Three pairs of skis suitable for Nordic ski competitions were used, treated with a paraffin wax MAPLUS P1 HOT®, whereon the three products A, B and C, shown below, were applied, following the standard procedure for the application of such products.

The three products applied are as follows:
- A (prior art): partly fluorinated alkanes of general formula RF-RH, wherein RF-RH are fluorinated block alkanes with linear chains C₂₈-C₃₂;
- B (prior art): asymmetric aromatic diester of the terephthalic acid, in particular octadecyl heptadeca-fluoroundecyl terephthalate;
- C (invention): product according to example 2.

After having zeroed the skis according to the standard procedure, the skier makes three turns of the run for each product, calculating the average times. The operation will be repeated 4 more times.

The results obtained allowed highlighting how the average times of the skis treated with C are 0,65% lower than those of product A, 0,26% lower than those of product B.

### EXAMPLE 11

The assessment of the efficacy of the compounds according to examples 2, 4 and 6 was made on a Nordic ski run traced with constant slope at 1700 m altitude, with the following snow and weather conditions:
- air temperature: -4°C;
- relative humidity: 70%;
- snow temperature: -8°C;
- snow type: transformed;
- snow appearance: granular;
- weather conditions: cloudless.

The tests were conducted with the same methods shown in the previous example.

The following products were applied on the bottom linings of three pairs of skis, without prior treatment with ski-waxes:
- A (invention): ski-wax for medium-low temperatures marketed with the name MAPLUS P1 COLD®, based on paraffin wax, with 10% by weight of the product according to example 2;
- B (invention): ski-wax for medium-low temperatures marketed with the name MAPLUS P1 COLD®, based on paraffin wax, with 10% by weight of the product according to example 4;
- C (invention): ski-wax for medium-low temperatures marketed with the name MAPLUS P1 COLD®, based on paraffin wax, with 10% by weight of the product according to example 6.

The skier records the times with the same methods as in the previous example.

The results obtained allowed highlighting how the average times using the skis treated with A are 0,09% lower than those of product B and 0,28% lower than those of product C.

Innovatively, the compound object of the present invention can be used with excellent efficiency in a wide range of environment temperatures.

Advantageously, the compound object of the present invention is highly versatile, as it exhibits good compatibility with most paraffin waxes usually used in the field.

Advantageously, the compound of the present invention is an excellent water repellent, allowing an increase of performance during the execution of the above winter sports.

Advantageously, the alkoxy radicals in compounds RO- of formula (I) are selected with a high molecular weight so as to make the product not reactive with water and to prevent any auto-condensation of radicals ≡Si-OH.

A further advantage, moreover, in using products of formula (I) having a high molecular weight consists in their reduced volatility and in the relatively low melting points, due to their complex and asymmetrical structure characterised in large free molecular volumes that make them difficult to crystallize.

If compounds of formula (I) are used as solid lubricants, they may be used alone or in a mixture, for example with paraffins, mixtures of paraffins, mixtures of paraffins and mineral oils, linear or branched perfluorinated and/or fluorinated block alkanes, PTFE, boron nitride, molybdenum sulphite, fluorine graphite.

In such mixtures, the compound of formula (I) is preferably present in a quantity comprised between 0,3% and 30%, and they may be prepared by simple incorporation by melting, optionally with the addition of compatibilizing agents.

In fact, even if these compounds may be used either as liquids or solids, in the latter case the melting point must be compatible with the application methods normally followed by the man skilled in the art. Such limit depends on the maximum temperature the bottom lining of the ski, often polyethylene, can withstand without getting damaged. Generally, the compounds with a melting point comprised between 30 and 150°C should be preferred.

It is possible that some of the features of the finding are defined in detail only with reference to a single category of products comprised in the general formula (I). However, when not stated, the man skilled in the art will immediately understand thanks to common general knowledge that the definition of such features and advantages may be extended to all the compounds of formula (I).

## Claims

1. Use of a compound of following formula (I), pure or in mixture, as sliding agent: 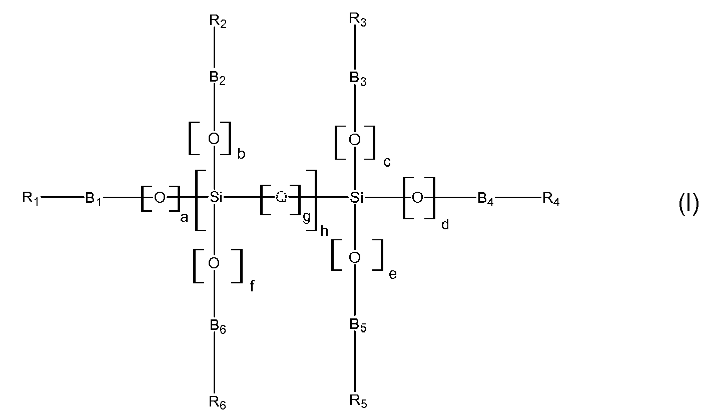 wherein:
- at least one between R₁, R₂, R₃, R₄, R₅, R₆ is a linear or branched perfluorocarbon radical of general formula CₙF₂ₙ₊₁, n being an integer comprised between 2 and 20,
- the remaining radicals R₁, R₂, R₃, R₄, R₅, R₆ being independently selected from the group consisting of:
a) H(CF₂)ₙ, wherein n is an integer comprised between 2 and 20;
b) hydrocarbon radical from C₅ to C₂₄;
c) phenyl;
d) R"₃Si-O-(R"₂SiO)ᵢ, wherein R" is a hydrocarbon radical from C₁ to C₅ and i is
an integer comprised between 3 and 50;
- B₁, B₂, B₃, B₄, B₅, B₆ indicate covalent bonds or divalent radicals selected from the group consisting of:
e) -CH=CHCH₂-;
f) -(CH₂)ₚ-;
g) -(CH₂)ₚ-O-(CH₂)ᵣ-;
h) -(CH₂)ₚ-S-(CH₂)ᵣ-;
i) -CH=CH-(CH₂)ₚ-O-(CH₂)ᵣ-;
j) -CH=CH-(CH₂)ₚ-S-(CH₂)ᵣ-;
k) -CH₂CH(OCH₃)CH₂-;
l) -(CH₂)ₚ-O-(C₆H₄)-(CH₂)ᵣ-;
m) -(CH₂)ₚ-O-(C₆H₄)-O-(CH₂)ᵣ-;
n) -(CH₂)p-S-(CₑH₄)-O-(CH₂)ᵣ-;
o) -(CH₂)ₚ-(C₆H₄)-(CH₂)ᵣ-;
wherein p and r are integers comprised between 2 and 10;
- a, b, c, d, e, f, g are independently equal to 0 or 1;
- h is an integer comprised between 0 and 3;
- for h≠0, Q is a divalent radical selected from the group consisting of:
p) -O-;
q) -(CH₂)ₛ-;
r) -O-(CH₂)ₛ-O-;
s) -(CH₂)ₜ-O-(CH₂)ᵤ-;
t) -O-(CH₂)ₜ-O-(CH₂)ᵤ-O-;
u) -(CH₂)_{p'}-CₙF₂ₙ-(CH₂)_{r'}-;
v) -O-(CH₂)_{p'}-CₙF₂ₙ-(CH₂)_{r'}-O-;
wherein s is an integer comprised between 1 and 25, t and u are independently integers comprised between 2 and 20, p' and r' are independently integers comprised between 2 and 10.

2. Use of a compound of formula (I) according to claim 1, wherein n is an integer comprised between 4 and 10.

3. Use of a compound of formula (I) according to claim 1 or 2, wherein the remaining radicals R₁, R₂, R₃, R₄, R₅, R₆ are hydrocarbon radicals from C₁₀ to C₁₈.

4. Use of a compound of formula (I) according to claim 3, wherein said hydrocarbon radicals have a saturated and linear chain.

5. Use of a compound of formula (I) according to any one of the previous claims, wherein R" is a hydrocarbon radical C₁ or C₂.

6. Use of a compound of formula (I) according to any one of the previous claims, mixed with at least one of the compounds selected from paraffin, mixtures of paraffins, mineral oils, linear or branched perfluorinated and/or fluorinated block alkanes, PTFE, boron nitride, molybdenum sulphite, fluorine graphite, antistatic agents.

7. Use of a compound of formula (I) according to any one of the previous claims, wherein said compound is applicable onto the contact surface of a gear, suitable for practicing winter sports, with the snow.

8. Use of a compound of formula (I) according to one of claims from 1 to 6, wherein said compound is incorporated into a contact surface or bottom lining of a gear suitable for practicing winter sports.

9. Use of a compound of formula (I) according to any one of the previous claims, having a melting point comprised between 30 and 150°C.

10. Use of a compound of formula (I) according to any one of the previous claims, wherein such compound is present in the mixture in a quantity comprised between 0,3% and 30%.

11. Use of a following compound of formula (I) according to any one of the previous claims, as water repellent agent.

12. Compound of formula (I) wherein:
- h is equal to 1;
- at least four between a, b, c, d, e, f are simultaneously equal to 1;
- at least one between R₁, R₂, R₃, R₄, R₅, R₆ is a linear or branched perfluorocarbon radical of general formula CₙF₂ₙ₊₁, n being an integer comprised between 2 and 20,
- the remaining radicals R₁, R₂, R₃, R₄, R₅, R₆ being independently selected from the group consisting of:
a) H(CF₂)ₙ, wherein n is an integer comprised between 2 and 20;
b) hydrocarbon radical from C₅ to C₂₄;
c) phenyl;
d) R"₃Si-O-(R"₂SiO)ᵢ wherein R" is a hydrocarbon radical from C₁ to C₅ and i is
an integer comprised between 3 and 50;
- B₁, B₂, B₃, B₄, B₅, B₆ indicate covalent bonds or divalent radicals selected from the group consisting of:
e) -CH=CHCH₂-;
f) -(CH₂)ₚ-;
g) -(CH₂)ₚ-O-(CH₂)ᵣ-;
h) -(CH₂)ₚ-S-(CH₂)ᵣ-;
i) -CH=CH-(CH₂)ₚ-O-(CH₂)ᵣ-;
j) -CH=CH-(CH₂)ₚ-S-(CH₂)ᵣ-;
k) -CH₂CH(OCH₃)CH₂-;
l) -(CH₂)ₚ-O-(C₆H₄)-(CH₂)ᵣ-;
m) -(CH₂)ₚ-O-(C₆H₄)-O-(CH₂)ᵣ-;
n) -(CH₂)ₚ-S-(C₆H₄)-O-(CH₂)ᵣ-;
o) -(CH₂)ₚ-(C₆H₄)-(CH₂)ᵣ-;
wherein p and r are integers comprised between 2 and 10.

13. Compound of formula (I) wherein:
- h is equal to 0;
- a is equal to 0;
- at least one between c, d, e is equal to 1;
- radical R₁ is selected from the group consisting of:
a) hydrocarbon radical from C₅ to C₂₄;
b) phenyl;
c) R"₃Si-O-(R"₂SiO)ᵢ wherein R" is a hydrocarbon radical from C₁ to C₅ and i is
an integer comprised between 3 and 50;
- at least one between radicals R₃, R₄, R₅ is:
d) a linear or branched perfluorocarbon radical of general formula CₙF₂ₙ₊₁, n being an integer comprised between 2 and 20; or
e) H(CF₂)ₙ, wherein n is an integer comprised between 2 and 20;
- B₁, B₃, B₄, B₅ indicate covalent bonds or divalent radicals selected from the group consisting of:
f) -CH=CHCH₂-;
g) -(CH₂)ₚ-;
h) -(CH₂)ₚ-O-(CH₂)ᵣ-;
i) -(CH₂)ₚ-S-(CH₂)ᵣ-;
j) -CH=CH-(CH₂)ₚ-O-(CH₂)ᵣ-;
k) -CH=CH-(CH₂)ₚ-S-(CH₂)ᵣ-;
l) -CH₂CH(OCH₃)CH₂-;
m) -(CH₂)ₚ-O-(C₆H₄)-(CH₂)ᵣ-;
n) -(CH₂)ₚ-O-(C₆H₄)-O-(CH₂)ᵣ-;
o) -(CH₂)ₚ-S-(C₆H₄)-O-(CH₂)ᵣ-;
p) -(CH₂)ₚ-(C₆H₄)-(CH₂)ᵣ-;
wherein p and r are integers comprised between 2 and 10.

14. Use of a compound of formula (I), according to one of claims 12 or 13, pure or in a mixture, as sliding agent.
